# EUROPEAN PATENT APPLICATION

(11) **EP 4 637 095 A1**
(43) Date of publication of application: **22.10.2025**
(21) Application number: 23909690.2
(22) Date of filing: 08.11.2023
(51) Int. Cl.: H04L 41/0803

(54) **CONFIGURATION ROLLBACK POINT CONTROL METHOD AND APPARATUS, ELECTRONIC DEVICE AND STORAGE MEDIUM**

(30) Priority: 30.12.2022 CN 202211731057
(71) Applicant: Huawei Technologies Co., Ltd., Shenzhen, Guangdong 518129 (CN)
(72) Inventor: LIU, Bin, Shenzhen, Guangdong 518129 (CN); FENG, Chong, Shenzhen, Guangdong 518129 (CN)
(74) Representative: Gill Jennings & Every LLP
(86) International application number: PCT/CN2023/130511
(87) International publication number: WO 2024/139758

(57) **Abstract**

This application belongs to the field of network communication technologies, and discloses a configuration rollback point control method and apparatus, an electronic device, and a storage medium. According to the method, in a process of updating configuration data of a network element, a configuration update packet carries a control identifier, and the control identifier indicates whether to generate a configuration rollback point. Further, when the control identifier indicates to generate the configuration rollback point, the network element generates the configuration rollback point based on updated configuration data; or when the control identifier indicates not to generate the configuration rollback point, a step of generating the configuration rollback point based on updated configuration data is not performed, to control the configuration rollback point on the network element side. Therefore, the network element does not need to generate the configuration rollback point each time a configuration change occurs, thereby reducing a quantity of configuration rollback points, reducing consumption of storage resources of the network element, and improving performance of updating the configuration data.

## Description

This application claims priority to Chinese Patent Application No. 202211731057.X, filed on December 30, 2022 and entitled "CONFIGURATION ROLLBACK POINT CONTROL METHOD AND APPARATUS, ELECTRONIC DEVICE, AND STORAGE MEDIUM", which is incorporated herein by reference in its entirety.

### TECHNICAL FIELD

This application relates to the field of network communication technologies, and in particular, to a configuration rollback point control method and apparatus, an electronic device, and a storage medium.

### BACKGROUND

As carriers raise higher requirements on configuration reliability and easy operation and maintenance of carrier-class devices (such as a network element in a network), a configuration rollback technology emerges. In the configuration rollback technology, global configuration data in each network element configuration process is recorded by using a configuration rollback point. In a case of abnormal configuration, a configuration status of a system of the network element may be quickly and conveniently rolled back to a configuration rollback point specified by a client, to reduce impact of the abnormal configuration on the system.

Currently, the network element in the network enables a function of automatically generating a configuration rollback point. In a process of configuring the network element by the client, if configuration performed on the network element this time is different from configuration performed on the network element last time, that is, a configuration change occurs, the network element generates a configuration rollback point based on the configuration performed on the network element this time.

The network element generates a configuration rollback point each time a configuration change occurs. Once configuration changes occur frequently, a quantity of configuration rollback points stored in the network element increases, and consumption of storage resources of the network element increases.

### SUMMARY

Embodiments of this application provide a configuration rollback point control method and apparatus, an electronic device, and a storage medium, to control a quantity of configuration rollback points in a network element and reduce consumption of storage resources of the network element. The technical solutions are as follows.

According to a first aspect, a configuration rollback point control method is provided. The method is performed by a network element, and the method includes at least the following steps: updating, based on a configuration update packet of a client, configuration data used by a system of the network element in a running process, where the configuration update packet indicates to update the configuration data, the configuration update packet carries a control identifier, and the control identifier indicates whether to generate a configuration rollback point; and generating the configuration rollback point based on updated configuration data when the control identifier indicates to generate the configuration rollback point; or skipping performing, when the control identifier indicates not to generate the configuration rollback point, a step of generating the configuration rollback point based on updated configuration data.

According to the method, in a process of updating the configuration data of the network element, the configuration update packet carries the control identifier, and the control identifier indicates whether to generate the configuration rollback point. Further, when the control identifier indicates to generate the configuration rollback point, the network element generates the configuration rollback point based on the updated configuration data; or when the control identifier indicates not to generate the configuration rollback point, the step of generating the configuration rollback point based on the updated configuration data is not performed, to control the configuration rollback point on the network element side. Therefore, the network element does not need to generate the configuration rollback point each time a configuration change occurs, thereby reducing a quantity of configuration rollback points, reducing consumption of storage resources of the network element, and improving performance of updating the configuration data.

In a possible implementation, for the skipping performing, when the control identifier indicates not to generate the configuration rollback point, a step of generating the configuration rollback point based on updated configuration data, when the network element enables a function of automatically generating a configuration rollback point, if the control identifier indicates not to generate the configuration rollback point, the step of generating the configuration rollback point based on the updated configuration data is not performed.

Based on the possible implementation, when the network element enables the function of automatically generating the configuration rollback point, the control identifier indicates not to generate the rollback point, and further, according to an indication of a second control identifier, after the configuration data is updated, the configuration rollback point is not generated based on the updated configuration data. There is no need to generate a configuration rollback point each time the configuration data is updated, thereby reducing a quantity of configuration rollback points in the network element, reducing consumption of storage resources of the network element, and improving performance of updating the configuration data.

**In** a possible implementation, for a step of generating the configuration rollback point based on updated configuration data when the control identifier indicates to generate the configuration rollback point, when the network element does not enable a function of automatically generating a configuration rollback point, if the control identifier indicates to generate the configuration rollback point, the configuration rollback point is generated based on the updated configuration data.

Based on the possible implementation, after a series of configurations are subsequently performed on a running datastore, the system can still roll back, based on the configuration rollback point, to a configuration status after the running datastore is updated this time, so that the configuration rollback point is generated as required.

In a possible implementation, when the control identifier indicates to generate the configuration rollback point, the configuration update packet further carries configuration description information, and the configuration description information is used to describe changed configuration data in the configuration data.

Based on the possible implementation, it is convenient for the network element to name the generated configuration rollback point by using the configuration description information, so that when a user subsequently queries the name of the configuration rollback point, the changed configuration data in the current configuration is clear based on the configuration description information. This helps the user to subsequently determine whether to roll back a system configuration to the configuration rollback point.

In a possible implementation, the control identifier is located in an extension area of the configuration update packet.

Based on the possible implementation, the control identifier is located in the extension area of the configuration update packet, to avoid impact of the control identifier on an existing service identifier at another location in the configuration update packet.

In a possible implementation, the configuration update packet is a commit configuration packet, an edit configuration packet, or a copy configuration packet, where the commit configuration packet indicates to commit configuration data in a candidate datastore to the running datastore, the edit configuration packet indicates to update first configuration data in the running datastore or add second configuration data to the running datastore, the copy configuration packet indicates to copy third configuration data in a source datastore to the running datastore, and the running datastore includes the configuration data used by the system in the running process.

Based on the possible implementation, any one of the configuration update packets can carry the control identifier, to meet requirements of different application scenarios.

In a possible implementation, the configuration update packet supports at least one of a network configuration protocol, a representational state transfer configuration protocol, and a remote procedure call protocol.

Based on the possible implementation, the plurality of configuration protocols all support controlling the configuration rollback point by using the control identifier, to meet requirements of different application scenarios.

According to a second aspect, a configuration rollback point control method is provided. The method is performed by a client, and the method includes at least the following steps: in response to an update operation on configuration data used by a system of a network element in a running process, generating a configuration update packet ; and sending the configuration update packet to the network element, where the configuration update packet indicates to update the configuration data, the configuration update packet carries a control identifier, the control identifier indicates whether to generate a configuration rollback point, and the configuration rollback point is generated based on updated configuration data.

In a possible implementation, when the control identifier indicates to generate the configuration rollback point, the configuration update packet further carries configuration description information, and the configuration description information is used to describe changed configuration data in the configuration data.

In a possible implementation, the control identifier is located in an extension area of the configuration update packet.

In a possible implementation, the configuration update packet is a commit configuration packet, an edit configuration packet, or a copy configuration packet, where the commit configuration packet indicates to commit configuration data in a candidate datastore to a running datastore, the edit configuration packet indicates to update first configuration data in the running datastore or add second configuration data to the running datastore, the copy configuration packet indicates to copy third configuration data in a source datastore to the running datastore, and the running datastore includes the configuration data used by the system in the running process.

In a possible implementation, the configuration update packet supports at least one of a network configuration protocol, a representational state transfer configuration protocol, and a remote procedure call protocol.

According to a third aspect, a configuration rollback point control apparatus is provided, and is configured to perform the configuration rollback point control method. Specifically, the configuration rollback point control apparatus includes a functional module configured to perform the configuration rollback point control method provided in any one of the first aspect or the optional manners of the first aspect.

According to a fourth aspect, a configuration rollback point control apparatus is provided, and is configured to perform the configuration rollback point control method. Specifically, the configuration rollback point control apparatus includes a functional module configured to perform the configuration rollback point control method provided in any one of the second aspect or the optional manners of the second aspect.

According to a fifth aspect, an electronic device is provided. The electronic device includes a processor, and the processor is configured to execute at least one segment of program, to enable the electronic device to perform an operation performed to implement the configuration rollback point control method according to any one of the first aspect or the optional manners of the first aspect, or implement an operation performed in the configuration rollback point control method according to any one of the second aspect or the optional manners of the second aspect.

According to a sixth aspect, a computer-readable storage medium is provided. The storage medium stores at least one segment of program, and program code is read by a processor to enable an electronic device to perform an operation performed in the configuration rollback point control method provided in any one of the first aspect or the optional manners of the first aspect, or implement an operation performed in the configuration rollback point control method according to any one of the second aspect or the optional manners of the second aspect.

According to a seventh aspect, a computer program product or a computer program is provided. The computer program product or the computer program includes at least one segment of program, the at least one segment of program is stored in a computer-readable storage medium, a processor of an electronic device reads the at least one segment of program from the computer-readable storage medium, and the processor executes the at least one segment of program, to enable the electronic device to perform an operation performed in the configuration rollback point control method according to any one of the first aspect or the optional manners of the first aspect, or perform an operation performed in the configuration rollback point control method according to any one of the second aspect or the optional manners of the second aspect.

In this application, based on the implementations provided in the foregoing aspects, the implementations may be further combined to provide more implementations.

### BRIEF DESCRIPTION OF DRAWINGS

FIG. 1 is a diagram of a network architecture to which a configuration rollback point generation method is applied according to an embodiment of this application;
FIG. 2 is a flowchart of a configuration rollback point control method according to an embodiment of this application;
FIG. 3 is a flowchart of committing a candidate datastore according to an embodiment of this application;
FIG. 4 is a flowchart of performing an edit configuration operation on a running datastore according to an embodiment of this application;
FIG. 5 is a flowchart of copying configuration data to a running datastore according to an embodiment of this application;
FIG. 6 is a diagram of a structure of a configuration rollback point control apparatus according to an embodiment of this application;
FIG. 7 is a diagram of a structure of a configuration rollback point control apparatus according to an embodiment of this application;
FIG. 8 is a diagram of a structure of an electronic device according to an embodiment of this application; and
FIG. 9 is a diagram of a structure of an electronic device according to an embodiment of this application.

### DESCRIPTION OF EMBODIMENTS

For ease of understanding of the technical solutions provided in this application, some terms in this application are explained as follows.

Configuration: a set of service or physical resource specifications/parameters that are visible to and can be modified by a user. Values of the service or physical resource specifications/parameters are referred to as configuration data.

Configuration operation: a series of operations such as addition, deletion, and modification performed by a user on configuration data of a system of a network element to meet a service requirement.

Configuration rollback point (checkpoint): After a user performs a configuration operation and commits the configuration, a network element saves one configuration rollback point. The configuration rollback point records a configuration status of a system after the current configuration performed by the user, and can be used as a configuration status point for configuration rollback. After performing the configuration operation and committing the configuration, the user checks a running status of the system. If an error, a fault, or another unexpected result (for example, service overload, service conflict, or insufficient device memory) occurs in running of the system due to the configuration operation, an original configuration needs to be restored. The user can specify a configuration rollback point, to roll back to a system configuration status recorded at the specified configuration rollback point.

The following further describes in detail implementations of this application with reference to accompanying drawings.

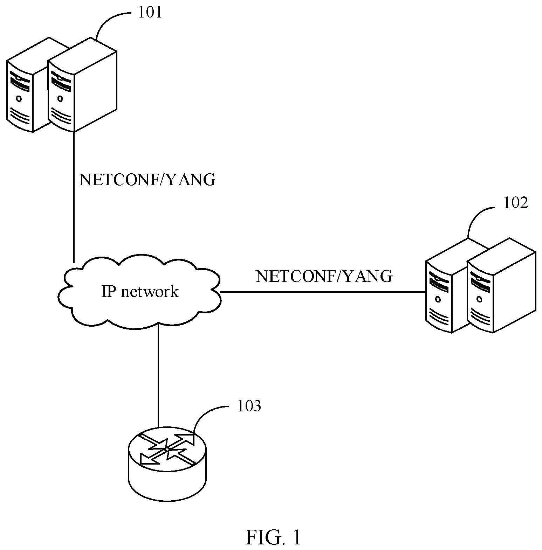

FIG. 1 is a diagram of a network architecture to which a configuration rollback point generation method is applied according to an embodiment of this application. Refer to FIG. 1. The network architecture includes at least one element management system (element management system, EMS) 101, at least one software defined network controller (software defined network controller, SDN Controller) 102, and at least one network element (network element, NE) 103, and the element management system 101 and the software defined network controller 102 are separately connected to the network element 103 over an Internet protocol (Internet protocol, IP) network.

The at least one element management system 101 serves as a network management center of an entire network, and the element management system 101 runs on an NMS server to manage the network element 103. The network element 103 serves as a server (server) of a network configuration protocol (network configuration protocol, NETCONF), and the element management system 101 or the software defined network controller 102 serves as a client (client) in the network, to perform system management on the network element 103 according to NETCONF. In some other embodiments, the software defined network controller 102 may alternatively serve as a client of the network configuration protocol, and perform system management on the network element 103 according to NETCONF.

For example, the element management system 101 or the software defined network controller 102 delivers configuration data to the network element 103 according to NETCONF, to configure the network element 103, so that the network element 103 completes a corresponding service by using the configuration data, that is, completes service configuration.

NETCONF provides a mechanism for managing a network device (for example, the network element). A client of NETCONF may add, modify, or delete configuration data of the network device by using the mechanism, and obtain configuration and status information of the network device. According to NETCONF, the network element provides standard application programming interfaces (application programming interfaces, APIs). The client can directly use these APIs to send configuration data to and obtain configuration data from the network element. The client may add, modify, or delete the configuration data of the network element by using a modeling language of NETCONF. The modeling language is, for example, a YANG modeling language.

A configuration database is disposed in the network element 103. The configuration database is a set of complete configuration parameters (or configuration data) about a device. The configuration database includes a running datastore (running datastore, RDS), a candidate datastore (candidate datastore, CDS), a startup datastore (startup datastore, SDS), and the like. The running datastore is used to store effective configuration data, status information, statistics information, and the like that run on the current device. It should be understood that the running datastore includes a set of configuration data currently running in the system. The candidate datastore is used to store configuration data to be run by the device, that is, candidate data of the running datastore. For example, in a function of a two-phase validation mode, the system creates an image of the running datastore, that is, the candidate datastore, in a memory of the network element for at least one user, and the at least one user shares the candidate datastore. The user can perform an edit configuration operation on the candidate datastore, and commit the candidate datastore to the running datastore after the editing is complete. The startup datastore is used to store configuration data loaded during device startup, which is similar to a saved configuration file.

The network architecture shown in FIG. 1 is described by using an example in which NETCONF is supported. In some other embodiments, the network architecture further supports a representational state transfer configuration protocol (representational state transfer configuration protocol, RESTCONF), a remote procedure call protocol (remote procedure call protocol, RPC), or another configuration protocol that supports update of the configuration data of the network element. RPC is, for example, a google remote procedure call protocol (google remote procedure call protocol, gRPC). It should be understood that the network architecture supports at least one configuration protocol of NETCONF, RESTCONF, or RPC.

In a process of updating the configuration data (for example, the configuration data in the running datastore) used by the system of the network element in the running process, the client in the network architecture indicates, by using a control identifier, the network element whether to generate a configuration rollback point, so that the network element determines, according to the indication of the control identifier after the configuration data is updated, whether to generate the configuration rollback point based on updated configuration data, and controls a quantity of configuration rollback points in the network element.

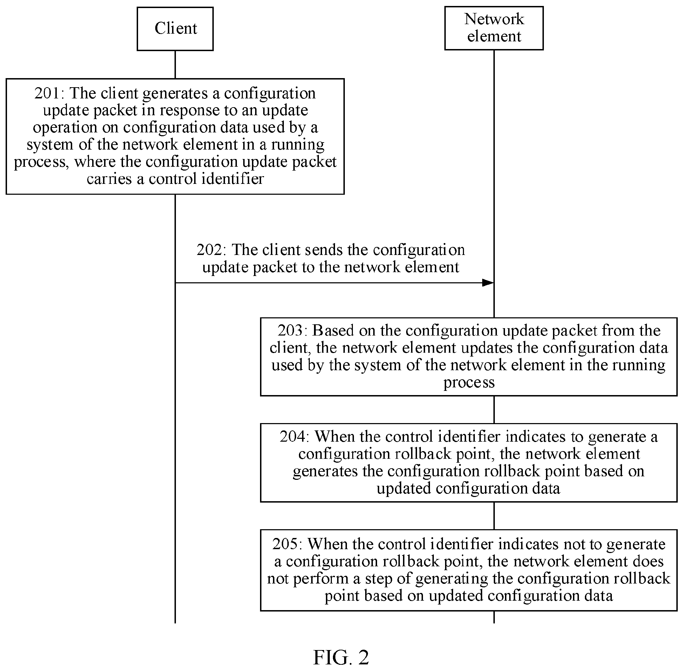

For further description of a process of controlling the configuration rollback point in the network element by the client based on the control identifier, refer to a flowchart of a configuration rollback point control method according to an embodiment of this application shown in FIG. 2. The method includes the following steps.

201: A client generates a configuration update packet in response to an update operation on configuration data used by a system of a network element in a running process.

The client is the element management system or the software defined network controller in the network structure shown in FIG. 1. The update operation is a configuration operation on the network element. The configuration data used by the system in the running process is located in a running datastore in the network element. Correspondingly, the update operation indicates to update the configuration data in the running datastore.

In a possible implementation, the update operation is a commit (commit) operation, an edit configuration (edit-config) operation, or a copy configuration (copy-config) operation. The commit operation supports committing a candidate datastore of the network element to the running datastore, to update the running datastore. Before performing the commit operation, a user performs an edit configuration operation on the candidate datastore by using the client, to update configuration data in the candidate datastore. After the candidate datastore is updated, the user performs the commit operation on the candidate datastore by using the client, to trigger the network element to commit the candidate datastore to the running datastore. The edit configuration operation supports loading configuration data edited by the user to the running datastore, for example, indicating to delete first configuration data in the running datastore, replace the first configuration data with second configuration data, or add the second configuration data to the running datastore. The first configuration data is any group of configuration data in the running datastore, and the group of configuration data includes one or more pieces of configuration data. The copy configuration (copy-config) operation supports copying third configuration data in a source datastore to the running datastore, to update the running datastore. The source datastore is a candidate datastore or a startup datastore, the third configuration data is any group of configuration data in the source datastore, and the group of configuration data includes one or more pieces of configuration data.

The configuration update packet indicates to update the configuration data. When the configuration data used by the system in the running process is located in the running datastore in the network element, the configuration update packet indicates to update the running datastore. Based on this, when the update operation is a commit operation, the configuration update packet is a commit configuration packet, and the commit configuration packet indicates to commit the configuration data in the candidate datastore to the running datastore. When the update operation is an edit configuration operation, the configuration update packet is an edit configuration packet, and the edit configuration packet indicates to update the first configuration data in the running datastore or add the second configuration data to the running datastore. Updating the first configuration data in the running datastore includes deleting the first configuration data or replacing the first configuration data with the second configuration data. If the edit configuration packet indicates to replace the first configuration data in the running datastore with the second configuration data, the edit configuration packet further carries the second configuration data. When the update operation is a copy configuration operation, the configuration update packet is a copy configuration packet, and the copy configuration packet indicates to copy the third configuration data in the source datastore to the running datastore. In this case, the copy configuration packet further carries the third configuration data.

In a possible implementation, the configuration update packet carries a control identifier, and the control identifier indicates whether to generate a configuration rollback point. The configuration rollback point is generated based on updated configuration data. The control identifier includes a first control identifier or a second control identifier, the first control identifier indicates to generate the configuration rollback point, and the second control identifier indicates not to generate the configuration rollback point. For example, the first control identifier and the second control identifier are respectively "true" and "false". Alternatively, the first control identifier and the second control identifier are respectively "1" and "0." Herein, a manner of representing the first control identifier and the second control identifier is not limited in this embodiment of this application.

In a possible implementation, the control identifier is located in an extension area of the configuration update packet, and the extension area is located at a tail or a beginning (for example, a packet header) of the configuration update packet, to avoid impact on an existing service identifier at another location in the configuration update packet. For example, a configuration rollback node (or field) is defined in an extension area of the configuration update packet, where the configuration rollback node is a node (or field) extended in the configuration update packet, the configuration rollback node is also referred to as a control node, and a value of the configuration rollback node is the control identifier. For example, when a value of the configuration rollback node is the first control identifier "true", the configuration rollback node indicates to generate the configuration rollback point. When a value of the configuration rollback node is the second control identifier "false", the configuration rollback node indicates not to generate the configuration rollback point.

When the control identifier in the configuration update packet indicates to generate the configuration rollback point, the configuration update packet further carries configuration description information, where the configuration description information is used to describe changed configuration data in the configuration data used by the system in the running process, that is, changed configuration data in the running datastore during the configuration. For example, the configuration description information describes which piece of configuration data in the running datastore is mainly updated this time, or which value the piece of configuration data is updated to.

The configuration update packet described above supports at least one of a network configuration protocol, a representational state transfer configuration protocol, and a remote procedure call protocol, to meet requirements of different application scenarios.

Different update operations trigger the client to generate different configuration update packets. Step 201 is subsequently described in detail with reference to a specific update operation. Step 201 is not described herein again.

202: The client sends the configuration update packet to the network element.

203: Based on the configuration update packet from the client, the network element updates the configuration data used by the system of the network element in the running process.

After receiving the configuration update packet, the network element updates the configuration data in the running datastore based on a packet type of the configuration update packet, to complete step 203. For configuration update packets of different packet types, processes in which the network element updates the configuration data are different. Step 203 is subsequently described in detail with reference to a specific configuration update packet. Step 203 is not described herein again.

204: When the control identifier indicates to generate the configuration rollback point, the network element generates the configuration rollback point based on the updated configuration data.

For example, the network element parses the configuration update packet, to obtain the control identifier in the configuration update packet. If the control identifier obtained through parsing is the first control identifier, the configuration rollback point is indicated to be generated. Correspondingly, the network element generates the configuration rollback point based on a running datastore in which the updated configuration data is located (that is, an updated running datastore). The configuration rollback point includes each piece of configuration data in the updated running datastore, which is used as global configuration data of the current configuration.

When the configuration update packet further carries the configuration description information, the network element further associates the configuration description information with the configuration rollback point. For example, if the configuration update packet indicates to use the configuration description information as a name of the configuration rollback point, the network element names the generated configuration rollback point by using the configuration description information, so that when a user subsequently queries the name of the configuration rollback point, the changed configuration data in the current configuration is clear based on the configuration description information. This helps the user to subsequently determine whether to roll back a system configuration to the configuration rollback point.

In a possible implementation, the network element supports enabling a function of automatically generating a configuration rollback point. The function means that the network element generates a configuration rollback point based on updated running data each time the running datastore is updated. When the network element does not enable the function of automatically generating the configuration rollback point, if the control identifier indicates to generate the configuration rollback point, the network element generates the configuration rollback point based on the updated configuration data. For example, when the network element does not enable the function of automatically generating the configuration rollback point, the user performs an update operation on the running datastore by using the client when delivering a task to the network element by using the client, and specifies, in the update operation, that a value of the control identifier in the configuration update packet is the first control identifier. Correspondingly, after receiving the configuration update packet, the network element parses the configuration update packet to obtain the first control identifier, and generates, according to an indication of the first control identifier, the configuration rollback point based on the updated running datastore after the running datastore is updated. In this way, after a series of configurations are subsequently performed on the running datastore, the system can still roll back, based on the configuration rollback point, to a configuration status after the running datastore is updated this time, so that the configuration rollback point is generated as required.

When a service provisioned to the network element this time can be provisioned by a plurality of clients (that is, a plurality of service provisioning parties), if the network element does not enable a function of automatically generating a configuration rollback point, a client (referred to as a first client) does not specify to generate a configuration rollback point when provisioning the service. After the first client configures the running datastore, if another client (referred to as a second client) delivers the task again, and performs a new round of configuration on the running datastore, configuration data newly configured by the second client overwrites configuration data configured by the first client. As a result, the configuration data configured by the first client is lost. However, based on the method provided in this embodiment of this application, when delivering the service, the first client updates the running datastore, and indicates, by using the first control identifier, the network element to generate the configuration rollback point. After the first client completes the update of the running datastore, the network element generates the configuration rollback point based on the updated running datastore according to an indication of the first control identifier. Subsequently, even if the second client delivers the task again and performs a new round of configuration on the running datastore, the configuration of the first client on the running datastore can still be stored because of existence of the configuration rollback point, and the configuration data of the first client is not lost, so that configuration consistency of service provisioning parties can be improved.

205: When the control identifier indicates not to generate the configuration rollback point, the network element does not perform a step of generating the configuration rollback point based on the updated configuration data.

For example, the network element parses the configuration update packet to obtain the control identifier in the configuration update packet. If the control identifier obtained through parsing is the second control identifier, it indicates not to generate the configuration rollback point. Correspondingly, after the network element completes updating the configuration data or completes updating the running datastore, a step of generating the configuration rollback point based on an updated operation datastore is no longer performed, so that generation of the configuration rollback point is skipped as required.

In a possible implementation, the network element supports enabling a function of automatically generating a configuration rollback point. When the network element enables the function of automatically generating the configuration rollback point, if the control identifier indicates not to generate the configuration rollback point, the network element does not perform the step of generating the configuration rollback point based on the updated configuration data. For example, when the network element enables the function of automatically generating the configuration rollback point, if a task that the user delivers to the network element by using the client is a target task, when delivering the target task, the user performs an update operation on the running datastore by using the client, so that the updated running datastore can complete the target task. If the target task has no requirement for the configuration rollback point, when performing the update operation on the running datastore by using the client, the user specifies that a value of the control identifier in the configuration update packet is the second control identifier. Correspondingly, after receiving the configuration update packet, the network element parses the configuration update packet to obtain the second control identifier. Although the function of automatically generating the configuration rollback point is enabled, after the running datastore is updated, the configuration rollback point is no longer generated based on the updated running datastore according to an indication of the second control identifier, and the configuration rollback point does not need to be generated each time the configuration data is updated. This reduces a quantity of configuration rollback points in the network element, reduces consumption of storage resources of the network element, and improves performance of updating the configuration data.

The target task is a task in which a quantity of times of updating some configuration data in the running datastore in a time period is greater than a target quantity of times, that is, a task of frequently updating the configuration data. The target task is, for example, an online task, or a task that needs to update configuration data of the network element in real time to update a current status of the target task, for example, a traffic optimization task or a monitoring configuration task. When the target task is to update the configuration data for a plurality of times, one of a plurality of pieces of configuration data is usually selected for configuration each time the configuration data is updated, and the configuration changes slightly each time the configuration data is updated. Therefore, after the network element enables the function of automatically generating the configuration rollback point, target data is frequently updated once the target task is delivered. Even if the configuration changes slightly each time the target data is updated, the configuration rollback point is still generated. The configuration rollback point includes global configuration data of the system of the entire network element, and a large quantity of configuration rollback points are frequently generated, occupying storage resources of the network element. As a result, the configuration rollback points generated early may be deleted due to insufficient storage resources, and the early valid configuration rollback points are lost. When the target task is delivered, in this application, the control identifier is specified as the second control identifier, to indicate the network element not to generate the configuration rollback point when the configuration data is updated this time, to avoid generating a large quantity of configuration rollback points due to frequent configuration updates caused by the target task, and reduce a quantity of configuration rollback points in the network element. This prevents the newly generated configuration rollback points from occupying a large quantity of storage resources of the network element and prevents the early valid configuration rollback points from being deleted.

In some other embodiments, if the network element does not enable a function of automatically generating a configuration rollback point, when the configuration update packet does not carry a control identifier, the network element does not perform a step of generating the configuration rollback point based on updated configuration data.

According to the method provided in this embodiment of this application, in a process of updating the configuration data of the network element, the configuration update packet carries the control identifier, and the control identifier indicates whether to generate the configuration rollback point. Further, when the control identifier indicates to generate the configuration rollback point, the network element generates the configuration rollback point based on the updated configuration data; or when the control identifier indicates not to generate the configuration rollback point, the step of generating the configuration rollback point based on the updated configuration data is not performed, to control the configuration rollback point on the network element side. Therefore, the network element does not need to generate the configuration rollback point each time a configuration change occurs, thereby reducing a quantity of configuration rollback points, reducing consumption of storage resources of the network element, and improving performance of updating the configuration data.

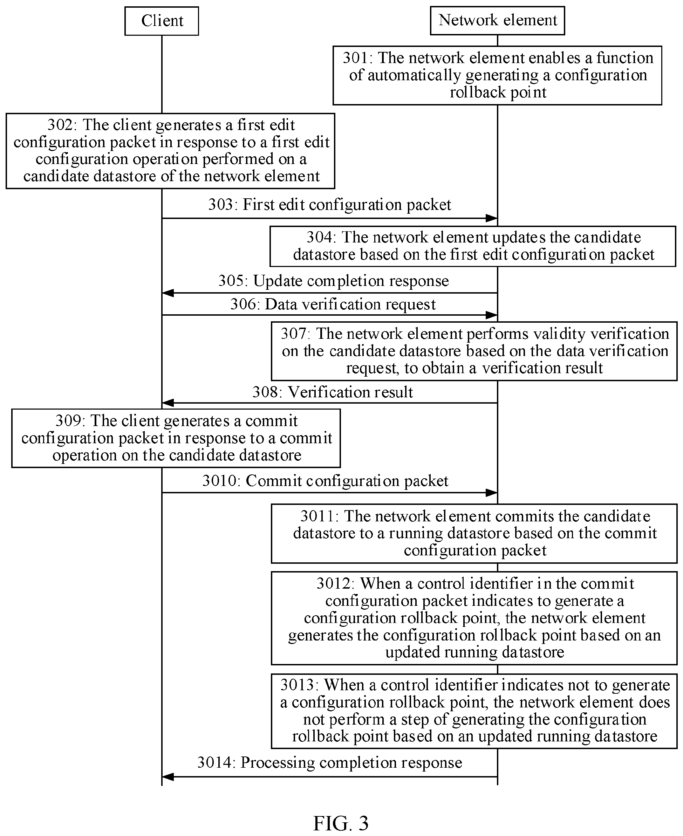

For example, the update operation is a commit operation. The following describes the method embodiment shown in FIG. 2 with reference to FIG. 3. FIG. 3 is a flowchart of committing a candidate datastore according to an embodiment of this application. FIG. 3 includes the following steps.

301: A network element enables a function of automatically generating a configuration rollback point.

For example, a client enables the function of automatically generating the configuration rollback point for the network element, to enable the function for the network element. After the network element enables the function, the client configures a running datastore of the network element each time the client delivers a service to the network element. When configuring the running datastore, the client updates configuration data in the running datastore. After the running datastore is configured, the network element generates the configuration rollback point based on the configured (or updated) running datastore.

Step 301 is an optional step. In some other embodiments, the network element may not enable a function of automatically generating a configuration rollback point. If the function is not enabled, update of a running datastore does not trigger the network element to generate the configuration rollback point.

302: The client generates a first edit configuration packet in response to a first edit configuration operation performed on a candidate datastore of the network element, where the first edit configuration packet indicates to update the candidate datastore.

The first edit configuration operation indicates to update the candidate datastore, for example, indicates to delete fourth configuration data in the candidate datastore, replace the fourth configuration data with fifth configuration data, or add the fifth configuration data to the candidate datastore. The fourth configuration data or the fifth configuration data is configuration data to be updated in the candidate datastore this time. The fourth configuration data is any group of configuration data in the candidate datastore, and the group of configuration data includes one or more pieces of configuration data.

For example, when delivering a service to the network element, a user performs the first edit configuration operation on the candidate datastore on a user operation interface of the client, and specifies, in the first edit configuration operation, to-be-updated configuration data (for example, the fourth configuration data or the fifth configuration data) in the candidate datastore and an update manner, to deliver configuration data related to the service. The client generates the first edit configuration packet in response to the first edit configuration operation. If the update manner is deleting the fourth configuration data, the first edit configuration packet may carry the fourth configuration data, or may not carry the fourth configuration data. If the update manner is replacing the fourth configuration data with the fifth configuration data or adding the fifth configuration data to the candidate datastore, the first edit configuration packet carries the fifth configuration data.

303: The client sends the first edit configuration packet to the network element.

304: The network element updates the candidate datastore based on the first edit configuration packet.

For example, after receiving the first edit configuration packet, the network element parses the first edit configuration packet to obtain the update manner. If the update manner is deleting the fourth configuration data, the network element deletes the fourth configuration data from the candidate datastore. If the update manner is replacing the fourth configuration data with the fifth configuration data, the network element replaces the fourth configuration data in the candidate datastore with the fifth configuration data carried in the first edit configuration packet. If the update manner is adding the fifth configuration data to the candidate datastore, the network element adds the fifth configuration data carried in the first edit configuration packet to the candidate datastore.

305: The network element sends an update completion response for the candidate datastore to the client.

After updating the candidate datastore based on the first edit configuration packet, the network element sends the update completion response to the client, to indicate that the candidate datastore has been updated based on the first edit configuration packet.

After the client receives the update completion response, it indicates that the current update on the candidate datastore is completed. If configuration data related to the service delivered this time is not configured in the candidate datastore, the client jumps to perform step 301. If configuration data related to the service delivered this time has been configured in the candidate datastore, the configuration of the candidate datastore ends, and the following step 306 is performed.

306: The client sends a data verification request to the network element, where the data verification request indicates to perform validity verification on the candidate datastore.

307: The network element performs validity verification on the candidate datastore based on the data verification request, to obtain a verification result.

For example, after receiving the data verification request, the network element performs the following validity verification on the candidate datastore according to an indication of the data verification request: The network element detects whether configuration data in the candidate datastore is consistent with configuration data in the running datastore. If the configuration data in the candidate datastore is consistent with the configuration data in the running datastore, the validity verification ends, and a verification result is generated. In this case, the verification result indicates that the candidate datastore and configuration data that is in the candidate datastore and that is the same as that in the running datastore do not need to be committed. If the configuration data in the candidate datastore is inconsistent with the configuration data in the running datastore, the network element checks whether a data type of the configuration data in the candidate datastore is valid, whether there is a configuration command that a user level is not authorized to execute, and whether an operation object exists, to ensure that the configuration data in the candidate datastore can run normally after the candidate datastore is committed to the running datastore. If a data type of each piece of configuration data in the candidate datastore is valid, a relationship (for example, an operation relationship or a logical relationship) between pieces of configuration data is valid, there is no configuration command that a user level is not authorized to execute, and an operation object exists, the validity verification on the candidate datastore succeeds. Otherwise, the validity verification on the candidate datastore fails. If the verification succeeds, a generated verification result indicates that the candidate datastore passes the verification and can be committed to the running datastore. If the verification fails, a generated verification result indicates that the candidate datastore fails the verification and cannot be committed to the running datastore.

308: The network element sends the verification result to the client.

After the client receives the verification result, if the verification result indicates that the verification on the candidate datastore succeeds and the candidate datastore can be committed to the running datastore, the client jumps to perform the following step 309. Otherwise, the client jumps to step 301, and continues to update the candidate datastore.

309: The client generates a commit configuration packet in response to a commit operation on the candidate datastore, where the commit configuration packet indicates to commit the configuration data in the candidate datastore to the running datastore.

The commit operation is also an update operation on configuration data used by a system of the network element in a running process. The commit configuration packet is a configuration update packet. Step 309 is an implementation of step 201.

For example, the user performs the commit operation on the candidate datastore on a user operation interface of the client, and specifies a control identifier in the commit operation. For example, if the network element has enabled the function of automatically generating the configuration rollback point and a task (for example, a target task) delivered to the network element this time has no requirement for the configuration rollback point, the control identifier is specified as a second control identifier, to indicate not to generate the configuration rollback point. If the network element has enabled the function of automatically generating the configuration rollback point and a task delivered to the network element this time has a requirement for the configuration rollback point, the control identifier is specified as a first control identifier, to indicate to generate the configuration rollback point. If the network element does not enable the function of automatically generating the configuration rollback point and a task delivered to the network element this time has a requirement for the configuration rollback point, the control identifier is specified as a first control identifier, to indicate to generate the configuration rollback point.

In response to the commit operation, the client generates the commit configuration packet, where the commit configuration packet carries the control identifier. For example, the generated commit configuration packet is as follows.

```
     <rpc message-id="5889" xmlns="urn:ietfparams:xml:ns:netconfbase:1.0">
         <commit>
          <checkpoint xmlns="urn:xxx:yang:xxx-netconf-ext">
               <save>false</save>
          </checkpoint>
         </commit>
     </rpc>
```

"checkpoint xmlns" in the commit configuration packet represents a configuration rollback node, and a value "false" of "save" in "checkpoint xmlns" is the second control identifier.

In some other embodiments, if the network element has enabled the function of automatically generating the configuration rollback point and a task delivered to the network element this time has a requirement for the configuration rollback point, no control identifier may be specified in the commit operation. In this case, the generated commit configuration packet does not carry the control identifier, to reduce a data amount of the commit configuration packet and improve transmission efficiency of the commit configuration packet.

In some other embodiments, if the network element has enabled the function of automatically generating the configuration rollback point, when the specified control identifier is a first control identifier or no control identifier is specified, configuration description information may be further specified in the commit operation, so that the network element can subsequently associate the generated configuration rollback point with the configuration description information.

In some other embodiments, if the network element does not enable the function of automatically generating the configuration rollback point and a task delivered to the network element this time has no requirement for the configuration rollback point, no control identifier may be specified in the commit operation. In this case, the generated commit configuration packet does not carry the control identifier, to reduce a data amount of the commit configuration packet and improve transmission efficiency of the commit configuration packet.

3010: The client sends the commit configuration packet to the network element.

3011: The network element commits the candidate datastore to the running datastore based on the commit configuration packet.

For example, the network element replaces the configuration data in the running datastore with the configuration data in the candidate datastore.

3012: When the control identifier in the commit configuration packet indicates to generate the configuration rollback point, the network element generates the configuration rollback point based on the updated running datastore.

Step 3012 is similar to step 204. Step 3012 is not described herein again in this embodiment of this application.

In some other embodiments, if the network element has enabled the function of automatically generating the configuration rollback point, when the commit configuration packet does not carry a control identifier, the network element generates the configuration rollback point based on the updated running datastore.

3013: When the control identifier indicates not to generate the configuration rollback point, the network element does not perform a step of generating the configuration rollback point based on the updated running datastore.

In some other embodiments, if the network element does not enable the function of automatically generating the configuration rollback point, when the commit configuration packet does not carry a control identifier, the network element does not perform the step of generating the configuration rollback point based on the updated running datastore.

3014: The network element sends a processing completion response for the commit configuration packet to the client.

According to the method provided in this embodiment of this application, in a process of committing the candidate datastore to the running datastore, the commit configuration packet carries the control identifier, and the control identifier indicates whether to generate the configuration rollback point. Further, when the control identifier indicates to generate the configuration rollback point, the network element generates the configuration rollback point based on the updated running datastore; or when the control identifier indicates not to generate the configuration rollback point, the step of generating the configuration rollback point based on the updated running datastore is not performed, to control the configuration rollback point on the network element side. Therefore, the network element does not need to generate a configuration rollback point each time a configuration change occurs, thereby reducing a quantity of configuration rollback points, reducing consumption of storage resources of the network element, and improving performance of updating the configuration data.

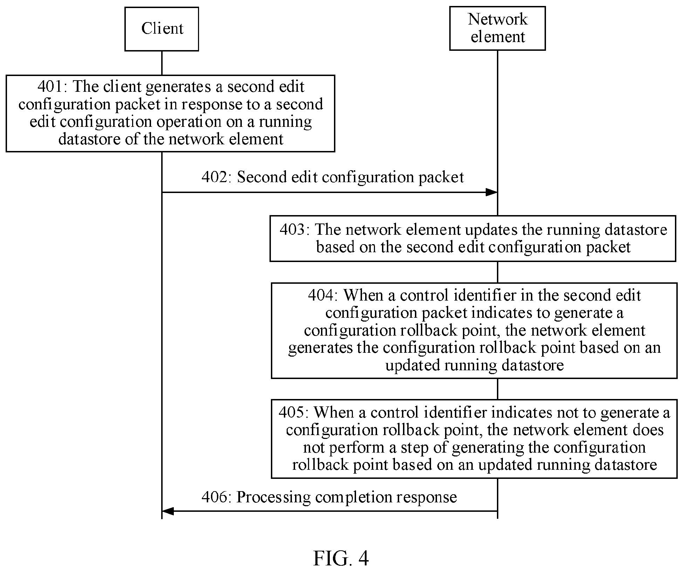

For example, the update operation is an edit configuration operation. The following describes the method embodiment shown in FIG. 2 with reference to FIG. 4. FIG. 4 is a flowchart of performing an edit configuration operation on a running datastore according to an embodiment of this application. FIG. 4 includes the following steps.

401: A client generates a second edit configuration packet in response to a second edit configuration operation on a running datastore of a network element, where the second edit configuration packet indicates to update the running datastore.

The second edit configuration operation is also an update operation on configuration data used by a system of the network element in a running process. The commit configuration packet is a configuration update packet. Step 401 is an implementation of step 201.

The second edit configuration operation indicates to update the running datastore, for example, indicates to delete first configuration data in the running datastore, replace the first configuration data with second configuration data, or add the second configuration data to a candidate datastore. The first configuration data and the second configuration data are configuration data to be updated in the running datastore this time.

For example, when delivering a service to the network element, a user performs the second edit configuration operation on the running datastore on a user operation interface of the client, and specifies, in the second edit configuration operation, to-be-updated configuration data (for example, the first configuration data or second configuration) in the running datastore and a new manner, to deliver configuration data related to the service. In addition, a control identifier is further specified in the second edit configuration operation. For a manner of specifying the control identifier, refer to step 309. Details are not described herein again.

The client generates the second edit configuration packet in response to the second edit configuration operation. In this case, the second edit configuration packet carries the control identifier. For example, the generated second edit configuration packet is as follows.

```
     <rpc xmlns="urn:ietf:params:xml:ns:netconf:base: 1.0" message-id="762">
           <edit-config>
              <target>
                <running/>
              </target>
              <config>
               <ifm xmlns="urn:xxx:yang:xxx-ifm">
                <interfaces>
                   <interface>
                     <name>Tunnel5</name>
                     <tunnel-protocol xmlns="urn:xxx:yang:xxx-tunnel-management">
                        <te-tunnel xmlns="urn:xxx:yang:xxx-mpls-te">
                          <sr-te>
                             <lsp-paths>
                               <lsp-path>
                                  <type>primary</type>
                                  <explicit-path-name>SR-LSP-SAMPLE</explicit-path-name>
                                  <hop-limit>32</hop-limit>
                                  <include-any>0x0</include-any>
                                  <exclude-any>0x0</exclude-any>
                               </lsp-path>
                             </lsp-paths>
                          </sr-te>
                        </te-tunnel>
                     </tunnel-protocol>
                   </interface>
                </interfaces>
               </ifm>
              </config>
          <checkpoint xmlns="urn:xxx:yang:xxx-netconf-ext">
             <save>false</save>
          </checkpoint>
           </edit-config>
     </rpc>
```

A target database <target> in the second edit configuration packet is a running datastore <running/>, "checkpoint xmlns" in the second edit configuration packet represents a configuration rollback node, and a value "false" of "save" in "checkpoint xmlns" is a second control identifier.

If an update manner recorded in the second edit configuration packet is deleting the first configuration data, the second edit configuration packet may carry the first configuration data, or may not carry the first configuration data. If an update manner is replacing the first configuration data with the second configuration data or adding the second configuration data to the running datastore, the second edit configuration packet carries the second configuration data.

In some other embodiments, if the network element has enabled a function of automatically generating a configuration rollback point, and a task delivered to the network element this time has a requirement for the configuration rollback point, no control identifier may be specified in the second edit configuration operation. In this case, the generated second edit configuration packet does not carry the control identifier, to reduce a data amount of the second edit configuration packet and improve transmission efficiency of the second edit configuration packet.

In some other embodiments, if the network element has enabled a function of automatically generating a configuration rollback point, when a specified control identifier is a first control identifier or no control identifier is specified, configuration description information may be further specified in the second edit configuration operation, so that the network element can subsequently associate the generated configuration rollback point with the configuration description information.

In some other embodiments, if the network element does not enable a function of automatically generating a configuration rollback point, and a task delivered to the network element this time has no requirement for the configuration rollback point, no control identifier may be specified in the second edit configuration operation. In this case, the generated second edit configuration packet does not carry the control identifier, to reduce a data amount of the second edit configuration packet and improve transmission efficiency of the second edit configuration packet.

402: The client sends the second edit configuration packet to the network element.

403: The network element updates the running datastore based on the second edit configuration packet.

For example, after receiving the second edit configuration packet, the network element parses the second edit configuration packet to obtain an update manner. If the update manner is deleting the first configuration data, the network element deletes the first configuration data from the running datastore. If the update manner is replacing the first configuration data with the second configuration data, the network element replaces the first configuration data in the running datastore with the second configuration data carried in the second edit configuration packet. If the update manner is adding the second configuration data to the running datastore, the network element adds the second configuration data carried in the second edit configuration packet to the running datastore.

404: When the control identifier in the second edit configuration packet indicates to generate a configuration rollback point, the network element generates the configuration rollback point based on an updated running datastore.

Step 404 is similar to step 204. Step 404 is not described herein again in this embodiment of this application.

In some other embodiments, if the network element has enabled a function of automatically generating a configuration rollback point, when the second edit configuration packet does not carry a control identifier, the network element generates the configuration rollback point based on the updated running datastore.

405: When the control identifier indicates not to generate a configuration rollback point, the network element does not perform a step of generating the configuration rollback point based on an updated running datastore.

In some other embodiments, if the network element does not enable a function of automatically generating a configuration rollback point, when the second edit configuration packet does not carry a control identifier, the network element does not perform the step of generating the configuration rollback point based on the updated running datastore.

406: The network element sends a processing completion response for the second edit configuration packet to the client.

According to the method provided in this embodiment of this application, in a process of editing the running datastore, the second edit configuration packet carries the control identifier, and the control identifier indicates whether to generate the configuration rollback point. Further, when the control identifier indicates to generate the configuration rollback point, the network element generates the configuration rollback point based on the updated running datastore; or when the control identifier indicates not to generate the configuration rollback point, the step of generating the configuration rollback point based on the updated running datastore is not performed, to control the configuration rollback point on the network element side. Therefore, the network element does not need to generate a configuration rollback point each time a configuration change occurs, thereby reducing a quantity of configuration rollback points, reducing consumption of storage resources of the network element, and improving performance of updating the configuration data.

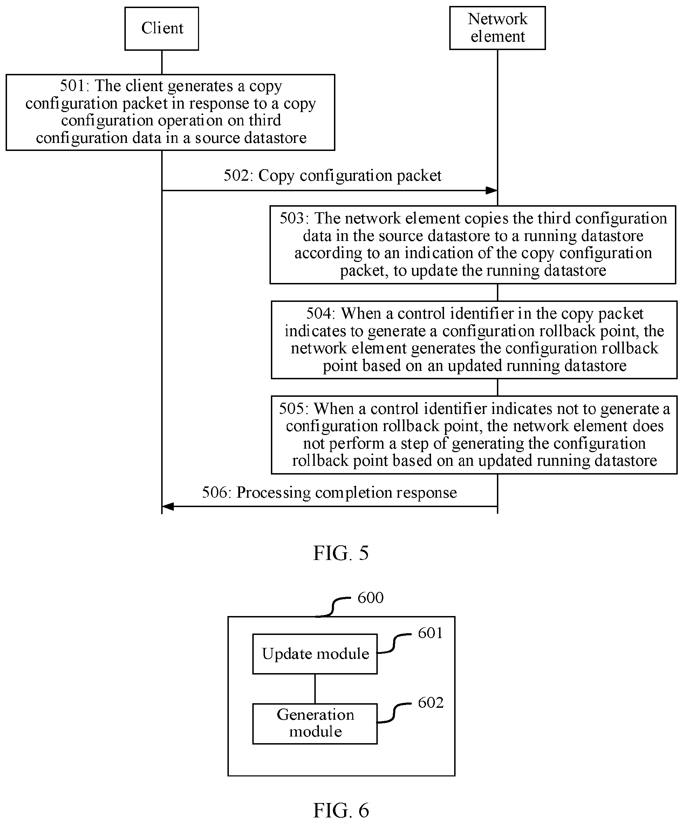

For example, the update operation is a copy configuration operation. The following describes the method embodiment shown in FIG. 2 with reference to FIG. 5. FIG. 5 is a flowchart of copying configuration data to a running datastore according to an embodiment of this application. FIG. 5 includes the following steps.

501: A client generates a copy configuration packet in response to a copy configuration operation on third configuration data in a source datastore, where the copy configuration packet indicates to copy the third configuration data to a running datastore.

The copy configuration operation is also an update operation on configuration data used by a system of a network element in a running process. The copy configuration packet is a configuration update packet. Step 501 is an implementation of step 201.

For example, when delivering a service to the network element, a user performs the copy configuration operation on the third configuration data in the source datastore on a user operation interface of the client, and specifies, in the copy configuration operation, the to-be-copied third configuration data in the source datastore, to deliver configuration data related to the service. In addition, a control identifier is further specified in the copy configuration operation. For a manner of specifying the control identifier, refer to step 309. Details are not described herein again.

The client generates the copy configuration packet in response to the copy configuration operation. In this case, the copy configuration packet carries the control identifier. For example, the generated copy configuration packet is as follows.

```
     <rpc xmlns="urn:ietf:params:xml:ns:netconf:base:1.0" message-id="762">
           <copy-config>
              <target>
                <running/>
              </target>
              <source>
                <candidate/>
              </source>
              <checkpoint xmlns="urn:xxx:yang:xxx-netconf-ext">
                <save>false</save>
              </checkpoint>
           </copy-config>
     </rpc>
```

In the copy configuration packet, a source datastore <source> is a candidate datastore <candidate/>, a target database <target> is a running datastore <running/>, "checkpoint xmlns" in the copy configuration packet represents a configuration rollback node, and a value "false" of "save" in "checkpoint xmlns" is a second control identifier.

In some other embodiments, if the network element has enabled a function of automatically generating a configuration rollback point, and a task delivered to the network element this time has a requirement for the configuration rollback point, no control identifier may be specified in the copy configuration operation. In this case, the generated copy configuration packet does not carry a control identifier, to reduce a data amount of the copy configuration packet and improve transmission efficiency of the copy configuration packet.

In some other embodiments, if the network element has enabled a function of automatically generating a configuration rollback point, when a specified control identifier is a first control identifier or no control identifier is specified, configuration description information may be further specified in the copy configuration operation, so that the network element can subsequently associate the generated configuration rollback point with the configuration description information.

In some other embodiments, if the network element does not enable a function of automatically generating a configuration rollback point, and a task delivered to the network element this time has no requirement for the configuration rollback point, no control identifier may be specified in the copy configuration operation. In this case, the generated copy configuration packet does not carry the control identifier, to reduce a data amount of the copy configuration packet and improve transmission efficiency of the copy configuration packet.

502: The client sends the copy configuration packet to the network element.

503: The network element copies the third configuration data in the source datastore to the running datastore according to an indication of the copy configuration packet, to update the running datastore.

504: When the control identifier in the copy packet indicates to generate a configuration rollback point, the network element generates the configuration rollback point based on an updated running datastore.

Step 504 is similar to step 204. Step 504 is not described herein again in this embodiment of this application.

In some other embodiments, if the network element has enabled a function of automatically generating a configuration rollback point, when the copy configuration packet does not carry a control identifier, the network element generates the configuration rollback point based on the updated running datastore.

505: When the control identifier indicates not to generate a configuration rollback point, the network element does not perform a step of generating the configuration rollback point based on an updated running datastore.

In some other embodiments, if the network element does not enable a function of automatically generating a configuration rollback point, when the copy configuration packet does not carry a control identifier, the network element does not perform the step of generating the configuration rollback point based on the updated running datastore.

506: The network element sends a processing completion response for the copy configuration packet to the client.

According to the method provided in this embodiment of this application, in a process of copying the configuration data to the running datastore, the copy configuration packet carries the control identifier, and the control identifier indicates whether to generate the configuration rollback point. Further, when the control identifier indicates to generate the configuration rollback point, the network element generates the configuration rollback point based on the updated running datastore; or when the control identifier indicates not to generate the configuration rollback point, the step of generating the configuration rollback point based on the updated running datastore is not performed, to control the configuration rollback point on the network element side. Therefore, the network element does not need to generate a configuration rollback point each time a configuration change occurs, thereby reducing a quantity of configuration rollback points, reducing consumption of storage resources of the network element, and improving performance of updating the configuration data.

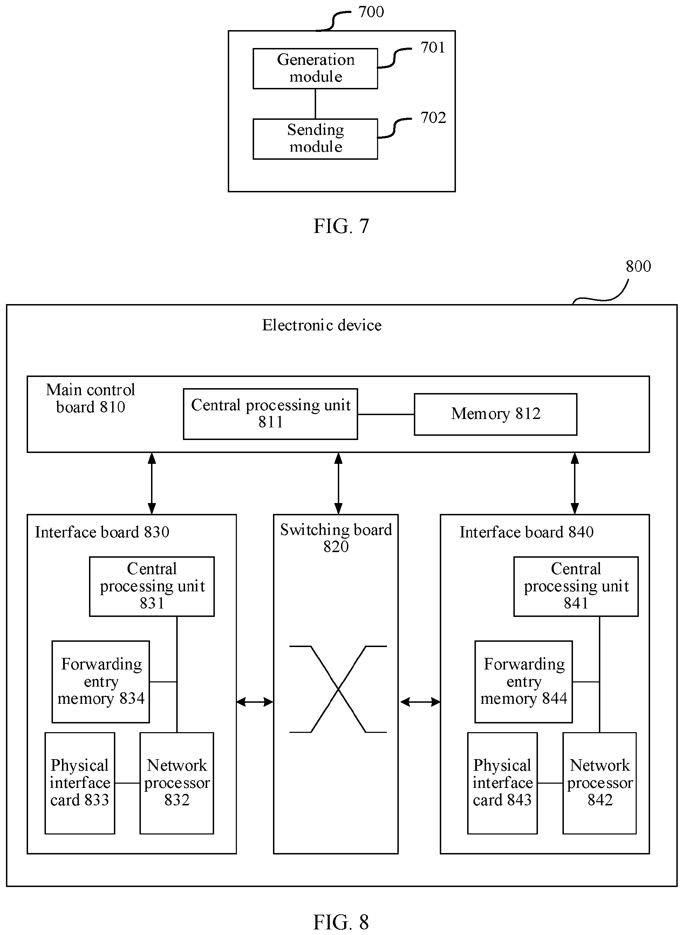

The method in embodiments of this application is described above, and the following describes an apparatus in embodiments of this application. It should be understood that the apparatus described below has any function of the network element or the client in the foregoing method. The foregoing describes in detail the configuration rollback point control method according to embodiments of this application with reference to FIG. 2 to FIG. 5. Based on a same inventive concept, the following describes a configuration rollback point control apparatus according to embodiments of this application with reference to FIG. 6 and FIG. 7. It should be understood that the technical features described in the method embodiments are also applied to the following apparatus embodiment.

FIG. 6 is a diagram of a structure of a configuration rollback point control apparatus according to an embodiment of this application. The apparatus 600 shown in FIG. 6 may be configured as the network element or the network element part in the foregoing embodiments or FIG. 2 to FIG. 5, and is configured to perform the method performed by the network element. The apparatus 600 includes:
an update module 601, configured to update, based on a configuration update packet of a client, configuration data used by a system of the network element in a running process, where the configuration update packet indicates to update the configuration data, the configuration update packet carries a control identifier, and the control identifier indicates whether to generate a configuration rollback point; and
a generation module 602, configured to generate the configuration rollback point based on updated configuration data when the control identifier indicates to generate the configuration rollback point, where
the generation module 602 is further configured to skip performing, when the control identifier indicates not to generate the configuration rollback point, a step of generating the configuration rollback point based on updated configuration data.

In a possible implementation, the generation module 602 is further configured to:
when the network element enables a function of automatically generating a configuration rollback point, if the control identifier indicates not to generate the configuration rollback point, skip performing the step of generating the configuration rollback point based on the updated configuration data.

In a possible implementation, the generation module 602 is further configured to:
when the network element does not enable a function of automatically generating a configuration rollback point, if the control identifier indicates to generate the configuration rollback point, generate the configuration rollback point based on the updated configuration data.

In a possible implementation, when the control identifier indicates to generate the configuration rollback point, the configuration update packet further carries configuration description information, and the configuration description information is used to describe changed configuration data in the configuration data.

In a possible implementation, the control identifier is located in an extension area of the configuration update packet.

In a possible implementation, the configuration update packet is a commit configuration packet, an edit configuration packet, or a copy configuration packet, where the commit configuration packet indicates to commit configuration data in a candidate datastore to a running datastore, the edit configuration packet indicates to update first configuration data in the running datastore or add second configuration data to the running datastore, the copy configuration packet indicates to copy third configuration data in a source datastore to the running datastore, and the running datastore includes the configuration data used by the system in the running process.

In a possible implementation, the configuration update packet supports at least one of a network configuration protocol, a representational state transfer configuration protocol, and a remote procedure call protocol.

It should be understood that the apparatus 600 corresponds to the network element in the foregoing method embodiments, and the modules in the apparatus 600 and the foregoing other operations and/or functions are respectively used to implement various steps and methods implemented by the network element in the method embodiments. For specific details, refer to the foregoing method embodiments. For brevity, details are not described herein again.

FIG. 7 is a diagram of a structure of a configuration rollback point control apparatus according to an embodiment of this application. The apparatus 700 shown in FIG. 7 may be configured as the client or the client part in the foregoing embodiments or FIG. 2 to FIG. 5, and is configured to perform the method performed by the client. The apparatus 700 includes:
a generation module 701, configured to: in response to an update operation on configuration data used by a system of a network element in a running process, generate a configuration update packet, where the configuration update packet indicates to update the configuration data, the configuration update packet carries a control identifier, the control identifier indicates whether to generate a configuration rollback point, and the configuration rollback point is generated based on updated configuration data; and
a sending module 702, configured to send the configuration update packet to the network element.

In a possible implementation, when the control identifier indicates to generate the configuration rollback point, the configuration update packet further carries configuration description information, and the configuration description information is used to describe changed configuration data in the configuration data.

In a possible implementation, the control identifier is located in an extension area of the configuration update packet.

In a possible implementation, the configuration update packet is a commit configuration packet, an edit configuration packet, or a copy configuration packet, where the commit configuration packet indicates to commit configuration data in a candidate datastore to a running datastore, the edit configuration packet indicates to update first configuration data in the running datastore or add second configuration data to the running datastore, the copy configuration packet indicates to copy third configuration data in a source datastore to the running datastore, and the running datastore includes the configuration data used by the system in the running process.

In a possible implementation, the configuration update packet supports at least one of a network configuration protocol, a representational state transfer configuration protocol, and a remote procedure call protocol.

It should be understood that the apparatus 700 corresponds to the client in the foregoing method embodiments, and the modules in the apparatus 700 and the foregoing other operations and/or functions are respectively used to implement various steps and methods implemented by the client in the method embodiments. For specific details, refer to the foregoing method embodiments. For brevity, details are not described herein again.

It should be understood that, when the apparatus 600 or 700 controls the configuration rollback point, division of the foregoing functional modules is merely used as an example for description. During actual application, the foregoing functions may be allocated to different functional modules for implementation as required, that is, an internal structure of the apparatus 600 or 700 is divided into different functional modules, to complete all or some of the functions described above. In addition, the apparatus 600 or 700 provided in the foregoing embodiments and the foregoing method embodiments pertain to a same concept. For a specific implementation process thereof, refer to the foregoing method embodiments. Details are not described herein again.

FIG. 8 is a diagram of a structure of an electronic device according to an embodiment of this application. The electronic device 800 may be configured as a network element. The electronic device 800 includes a main control board 810 and an interface board 830.

The main control board 810 is also referred to as a main processing unit (main processing unit, MPU) or a route processor card (route processor card). The main control board 810 controls and manages components in the electronic device 800, including functions of route calculation, device management, device maintenance, and protocol processing. The main control board 810 includes a central processing unit 811 and a memory 812.

The interface board 830 is also referred to as a line processing unit (line processing unit, LPU), a line card (line card), or a service board. The interface board 830 is configured to provide various service interfaces, and forward a data packet. The service interfaces include but are not limited to an Ethernet interface, a POS (Packet over SONET/SDH) interface, and the like. The Ethernet interface is, for example, a flexible Ethernet service interface (Flexible Ethernet Clients, FlexE Clients). The interface board 830 includes a central processing unit 831, a network processor 832, a forwarding entry memory 834, and a physical interface card (physical interface card, PIC) 833.

The central processing unit 831 on the interface board 830 is configured to control and manage the interface board 830 and communicate with the central processing unit 811 on the main control board 810. The central processing unit 831 implements the configuration rollback point control method provided in this application.

The network processor 832 is configured to forward a packet. A form of the network processor 832 may be a forwarding chip. Specifically, processing on an uplink packet includes processing at a packet ingress interface, and forwarding table lookup, and processing on a downlink packet includes forwarding table lookup, and the like.

The physical interface card 833 is configured to implement a physical layer interconnection function. Original traffic enters the interface board 830 from the physical interface card 833, and a processed packet is sent out from the physical interface card 833. The physical interface card 833 includes at least one physical interface. The physical interface is also referred to as a physical port. The physical interface card 833 corresponds to a FlexE physical interface 204 in a system architecture 200. The physical interface card 833, also referred to as a subcard, may be installed on the interface board 830, and is responsible for converting an optical/electrical signal into a packet, performing validity check on the packet, and forwarding the packet to the network processor 832 for processing. In some embodiments, the central processing unit 831 on the interface board 803 may also perform a function of the network processor 832, for example, implement software forwarding based on a general-purpose CPU, so that the network processor 832 is not needed in the physical interface card 833.

Optionally, the electronic device 800 includes a plurality of interface boards. For example, the electronic device 800 further includes an interface board 840. The interface board 840 includes a central processing unit 841, a network processor 842, a forwarding entry memory 844, and a physical interface card 843.

Optionally, the electronic device 800 further includes a switching board 820. The switching board 820 may also be referred to as a switch fabric unit (switch fabric unit, SFU). When the electronic device has a plurality of interface boards 830, the switching board 820 is configured to complete data exchange between the interface boards. For example, the interface board 830 and the interface board 840 may communicate with each other via the switching board 820.

The main control board 810 is coupled to the interface board 830. For example, the main control board 810, the interface board 830, the interface board 840, and the switching board 820 are connected to a system backplane through a system bus to implement interworking. In a possible implementation, an inter-process communication (inter-process communication, IPC) channel is established between the main control board 810 and the interface board 830, and the main control board 810 communicates with the interface board 830 through the IPC channel.

Logically, the electronic device 800 includes a control plane and a forwarding plane. The control plane includes the main control board 810 and the central processing unit 831. The forwarding plane includes components that perform forwarding, for example, the forwarding entry memory 834, the physical interface card 833, and the network processor 832. The control plane performs functions such as a function of a router, generating a forwarding table, processing signaling and a protocol packet, and configuring and maintaining a device status. The control plane delivers the generated forwarding table to the forwarding plane. On the forwarding plane, the network processor 832 performs, based on the forwarding table delivered by the control plane, table lookup and forwarding on a packet received by the physical interface card 833. The forwarding table delivered by the control plane may be stored in the forwarding entry memory 834. In some embodiments, the control plane and the forwarding plane may be completely separated, and are not on a same device.

It should be understood that, in this embodiment of this application, an operation on the interface board 840 is consistent with an operation on the interface board 830. For brevity, details are not described again. It should be understood that the electronic device 800 in this embodiment may correspond to the network element in the foregoing method embodiments, and the central processing unit 831 in the electronic device 800 may implement functions and/or various steps implemented by the network element in the foregoing method embodiments. For brevity, details are not described herein again.

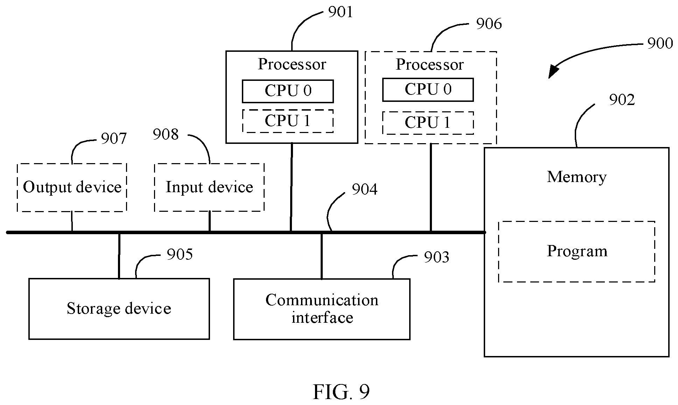

FIG. 9 is a diagram of a structure of an electronic device according to an embodiment of this application. The electronic device may be configured as the client mentioned above. As shown in the figure, the electronic device 900 includes a processor 901, a memory 902, a communication interface 903, a bus 904, and a storage device 905. The processor 901, the memory 902, the communication interface 903, and the storage device 905 communicate with each other through the bus 904, or may implement communication by using another means such as wireless transmission. The memory 902 is configured to store an instruction, and the processor 901 is configured to execute the instruction stored in the memory 902. The memory 902 stores program code, and the processor 901 may invoke a program stored in the memory 902 to perform the steps provided in the configuration rollback point control method (as shown in FIG. 2 to FIG. 6).

For example, the processor 901 may include one or more central processing units (central processing units, CPUs), for example, a CPU 0 and a CPU 1 shown in FIG. 9.

For example, the electronic device 900 may include a plurality of processors, for example, a processor 901 and a processor 906 shown in FIG. 9. Each of the processors may be a single-core processor (single-CPU), or may be a multi-core processor (multi-CPU). The processor herein may be one or more devices, circuits, and/or processing cores configured to process data (for example, computer program instructions).

In this application, the processor 901 may be implemented by using a CPU, or may be implemented by using an application-specific integrated circuit (application-specific integrated circuit, ASIC), or may be implemented by using a programmable logic device (programmable logic device, PLD). The PLD may be a complex programmable logic device (complex programmable logic device, CPLD), a field-programmable gate array (field-programmable gate array, FPGA), generic array logic (generic array logic, GAL), a data processing unit (data processing unit, DPU), a system on chip (system on chip, SoC), or any combination thereof.

The memory 902 may include a read-only memory and a random access memory, and provides an instruction and data for the processor 901. The memory 902 may further include a nonvolatile random access memory. For example, the memory 902 may further store information about a device type. The memory 902 may alternatively be a volatile memory, or may include both a volatile memory and a nonvolatile memory.

The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 903 is configured to communicate with another device or a communication network by using any apparatus such as a transceiver. The communication interface 904 includes a wired communication interface, or may include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

The bus 904 is configured to transmit information between the foregoing components. In addition to a communication bus, the bus 904 may further include a power bus, a status signal bus, and the like. However, for clear description, various types of buses are marked as the bus 904 in the figure. The communication bus may be classified into an address bus, a data bus, a control bus, and the like. For example, the communication bus may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like.

The storage device 905 may be a ROM or another type of static storage device that can store static information and instructions, or may be a RAM or another type of dynamic storage device that can store information and instructions, or may be an EEPROM, a compact disc read-only memory (compact disc read-only memory, CD-ROM) or another optical disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by the processor 901. The storage device includes at least one memory 902, but is not limited thereto. The storage device 905 may exist independently, and is connected to the processor 901 through the bus 904. Alternatively, the storage device 905 may be integrated with the processor 901.

For example, the memory 902 and the storage device 905 may be a first storage medium or a second storage medium in the electronic device 900. At least one of the memory 902 and the storage device 905 may store a program used to implement the configuration rollback point control method in this application. The processor 901 reads and runs the program, so that the electronic device 900 implements the configuration rollback point control method in this application.

In some embodiments, the electronic device 900 may further include an output device 907 and an input device 908. The output device 907 communicates with the processor 901, and may display information in a plurality of manners. For example, the output device 907 may be a liquid crystal display (liquid crystal display, LCD), a light emitting diode (light emitting diode, LED) display device, a cathode ray tube (cathode ray tube, CRT) display device, or a projector (projector). The input device 908 communicates with the processor 901, and may receive an input of a user in a plurality of manners. For example, the input device 908 may be a mouse, a keyboard, a touchscreen device, or a sensing device.

In an example embodiment, a computer-readable storage medium is further provided, and is, for example, a memory including at least one segment of program. The at least one segment of program may be executed by a processor in an electronic device, to complete the configuration rollback point control method in the foregoing embodiments. For example, the computer-readable storage medium is a non-transitory computer-readable storage medium, such as a read-only memory (read-only memory, ROM), a random access memory (random access memory, RAM), a compact disc read-only memory (compact disc read-only memory, CD-ROM), a magnetic tape, a floppy disk, or an optical data storage device.

An embodiment of this application further provides a computer program product or a computer program. The computer program product or the computer program includes at least one segment of program, and the at least one segment of program is stored in a computer-readable storage medium. A processor of an electronic device reads the at least one segment of program from the computer-readable storage medium, and the processor executes the at least one segment of program, so that the electronic device performs the configuration rollback point control method.

In addition, an embodiment of this application further provides an apparatus. The apparatus may be specifically a chip, a component, or a module. The apparatus may include a processor and a memory that are connected to each other. The memory is configured to store a computer-executable instruction. When the apparatus runs, the processor may execute a program stored in the memory, so that the chip performs the configuration rollback point control method in the foregoing method embodiments.

The apparatus, the device, the computer-readable storage medium, the computer program product, and the chip provided in embodiments are all configured to perform the corresponding method provided above. Therefore, for beneficial effects that can be achieved, refer to the beneficial effects of the corresponding method provided above. Details are not described herein again.

All or some of the foregoing embodiments may be implemented using software, hardware, firmware, or any combination thereof. When software is used to implement the embodiments, all or some of the foregoing embodiments may be implemented in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state disk (solid-state disk, SSD).

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

Information (including but not limited to user equipment information, personal information of a user, and the like), data (including but not limited to data used for analysis, stored data, displayed data, and the like), and a signal in this application are all authorized by the user or fully authorized by all parties, and capturing, use, and processing of related data need to conform to related laws, regulations, and standards of related countries and regions. For example, the configuration update packet in this application is obtained under full authorization.

All of the foregoing optional technical solutions may be randomly combined to form optional embodiments of this disclosure. Details are not described herein again.

The foregoing descriptions are merely optional embodiments of this application, but are not intended to limit this application. Any modification, equivalent replacement, or improvement made without departing from the spirit and principle of this application should fall within the protection scope of this application.

## Claims

1. A configuration rollback point control method, wherein the method is performed by a network element, and the method comprises:
updating, based on a configuration update packet of a client, configuration data used by a system of the network element in a running process, wherein the configuration update packet indicates to update the configuration data, the configuration update packet carries a control identifier, and the control identifier indicates whether to generate a configuration rollback point; and
generating the configuration rollback point based on updated configuration data when the control identifier indicates to generate the configuration rollback point; or
skipping performing, when the control identifier indicates not to generate the configuration rollback point, a step of generating the configuration rollback point based on updated configuration data.

2. The method according to claim 1, wherein the skipping performing, when the control identifier indicates not to generate the configuration rollback point, a step of generating the configuration rollback point based on updated configuration data comprises:
when the network element enables a function of automatically generating a configuration rollback point, if the control identifier indicates not to generate the configuration rollback point, skipping performing the step of generating the configuration rollback point based on the updated configuration data.

3. The method according to claim 1, wherein the generating the configuration rollback point based on updated configuration data when the control identifier indicates to generate the configuration rollback point comprises:
when the network element does not enable a function of automatically generating a configuration rollback point, if the control identifier indicates to generate the configuration rollback point, generating the configuration rollback point based on the updated configuration data.

4. The method according to any one of claims 1 to 3, wherein when the control identifier indicates to generate the configuration rollback point, the configuration update packet further carries configuration description information, and the configuration description information is used to describe changed configuration data in the configuration data.

5. The method according to any one of claims 1 to 3, wherein the control identifier is located in an extension area of the configuration update packet.

6. The method according to any one of claims 1 to 3, wherein the configuration update packet is a commit configuration packet, an edit configuration packet, or a copy configuration packet, wherein the commit configuration packet indicates to commit configuration data in a candidate datastore to a running datastore, the edit configuration packet indicates to update first configuration data in the running datastore or add second configuration data to the running datastore, the copy configuration packet indicates to copy third configuration data in a source datastore to the running datastore, and the running datastore comprises the configuration data used by the system in the running process.

7. The method according to any one of claims 1 to 3, wherein the configuration update packet supports at least one of a network configuration protocol, a representational state transfer configuration protocol, and a remote procedure call protocol.

8. A configuration rollback point control method, wherein the method is performed by a client, and the method comprises:
in response to an update operation on configuration data used by a system of a network element in a running process, generating a configuration update packet, wherein the configuration update packet indicates to update the configuration data, the configuration update packet carries a control identifier, the control identifier indicates whether to generate a configuration rollback point, and the configuration rollback point is generated based on updated configuration data; and
sending the configuration update packet to the network element.

9. A configuration rollback point control apparatus, wherein the apparatus is configured as a network element, and the apparatus comprises:
an update module, configured to update, based on a configuration update packet of a client, configuration data used by a system of the network element in a running process, wherein the configuration update packet indicates to update the configuration data, the configuration update packet carries a control identifier, and the control identifier indicates whether to generate a configuration rollback point; and
a generation module, configured to generate the configuration rollback point based on updated configuration data when the control identifier indicates to generate the configuration rollback point, wherein
the generation module is further configured to skip performing, when the control identifier indicates not to generate the configuration rollback point, a step of generating the configuration rollback point based on updated configuration data.

10. A configuration rollback point control apparatus, wherein the apparatus is configured as a client, and the apparatus comprises:
a generation module, configured to: in response to an update operation on configuration data used by a system of a network element in a running process, generate a configuration update packet, wherein the configuration update packet indicates to update the configuration data, the configuration update packet carries a control identifier, the control identifier indicates whether to generate a configuration rollback point, and the configuration rollback point is generated based on updated configuration data; and
a sending module, configured to send the configuration update packet to the network element.

11. An electronic device, wherein the electronic device comprises a processor, and the processor is configured to execute at least one segment of program, to enable the electronic device to perform the method according to any one of claims 1 to 7, or perform the method according to claim 8.

12. A computer-readable storage medium, wherein the storage medium stores at least one segment of program, and the at least one segment of program is read by a processor, to enable an electronic device to perform the method according to any one of claims 1 to 7, or perform the method according to claim 8.
